# EUROPÄISCHE PATENTANMELDUNG

(11) **EP 4 144 571 A1**
(43) Veröffentlichungstag der Anmeldung: **08.03.2023**
(21) Anmeldenummer: 22000192.9
(22) Anmeldetag: 08.08.2022
(51) Int. Cl.: B60L 53/10, B60L 53/16, B60K 15/04, B60K 15/05, B60K 15/03, H01R 13/52, H01R 13/66, H01R 24/76, H01R 13/504, H05K 5/00

(54) **MODULARE LADESCHNITTSTELLE**

(30) Priorität: 01.09.2021 DE 102021122632
(71) Anmelder: HARTING Automotive GmbH, 32339 Espelkamp (DE)
(72) Erfinder: Beimdieck, Carsten, 32339 Espelkamp (DE); Grinblats, Marco, 32339 Espelkamp (DE); Brandenbusch, Thomas, 32339 Espelkamp (DE)

(57) **Zusammenfassung**

Die Erfindung betrifft eine modulare Ladeschnittstelle (1) für zumindest teilweise elektrisch betriebene Fahrzeuge, aufweisend ein erstes Schnittstellenelement (10) für die Aufnahme von Wechselstromkontakten (20) und Steuerkontakten (21), ein zweites Schnittstellenelement (11) für die Aufnahme von Gleichstromkontakten (22). Dabei weisen das erste Schnittstellenelement (10) und das zweite Schnittstellenelement (11) jeweils zumindest ein zueinander korrespondierendes Formelement auf, sodass das erste Schnittstellenelement (10) und das zweite Schnittstellenelement (11) derart verbunden sind, dass in einer, von dem Fahrzeug hinaus weisenden, Außenseite (A) ein normgerechtes Steckgesicht (4) ausbildet ist.

## Beschreibung

Die Erfindung geht aus von einer modularen Ladeschnittstelle nach der Gattung des unabhängigen Anspruchs 1.

Derartige Ladeschnittstellen werden benötigt, um insbesondere elektrisch betriebene und/oder teilbetrieben Fahrzeuge mittels einem Ladekabel mit einer Ladestation koppeln zu können.

### Stand der Technik

Der Stand der Technik eröffnet zahlreiche Ladeschnittstellen, auch als Fahrzeuginlet oder Fahrzeugladeinlet bezeichnet. Diese Ladeschnittstellen sind jedoch zumeist für den Hersteller des entsprechenden, elektrisch (teil-)betriebenen Fahrzeugs aus einem Kunststoffgehäuse gegossen und mit elektrisch leitenden Kontaktelementen versehen. Die Kontaktelemente sind darüber hinaus dazu ausgelegt, irreversibel mit einem leitenden Kabel verbunden zu werden, beispielsweise durch einen Lötvorgang.

Nachteilig am Stand der Technik sind besonders. fehlende Flexibilität der Einsatzmöglichkeiten und der vergleichsweise hohe Kostenaufwand durch speziell gegossene Kunststoffgehäuse. Darüber hinaus ergibt sich bei einer verlöteten Ladeschnittstelle eine Herausforderung bei der Montage, der Wartung sowie der Reparatur, da die entsprechend Leiter eines Kabelstrangs erst aufwändig in Einzelarbeit mit Lot versehen, beziehungsweise davon befreit werden müssen.

### Aufgabenstellung

Die Aufgabe der Erfindung besteht darin, eine vielseitig einsetzbare, modular konfigurierbare Ladeschnittstelle für den Einbau in elektrisch betriebene und/oder teilelektrisch betriebene Fahrzeuge mit verbesserter Montagefreundlichkeit, Wartungsfreundlichkeit und/oder Reparaturfreundlichkeit anzubieten.

Die Aufgabe wird durch den Gegenstand des unabhängigen Anspruchs 1 gelöst.

Die erfindungsgemäße modulare Ladeschnittstelle für zumindest teilweise elektrisch betriebene Fahrzeuge weist ein erstes Schnittstellenelement für die Aufnahme von Wechselstromkontakten und Steuerkontakten, ein zweites Schnittstellenelement für die Aufnahme von Gleichstromkontakten auf. Dabei weisen das erste Schnittstellenelement und das zweite Schnittstellenelement jeweils zumindest ein zueinander korrespondierendes Formelement auf, sodass das erste Schnittstellenelement und das zweite Schnittstellenelement derart verbunden sind, dass in einer, von dem Fahrzeug hinaus weisenden, Außenseite ein normgerechtes Steckgesicht ausbildet ist. Das erste Schnittstellenelement und das zweite Schnittstellenelement werden von einem Rahmen eingefasst, welcher den Einbau in ein Fahrzeug ermöglicht und wobei eine, in das Fahrzeug hinein weisende, Innenseite mit einem Verschlussdeckel versehen ist, welcher zumindest teilweise lösbar mit dem Rahmen verbunden ist.

Die aus mehreren Modulen geformte Ladeschnittstelle ermöglicht somit durch die verschiedenen Bauteile einen kostensparenden Herstellungsprozess, sowie eine vorteilhafte Möglichkeit zur Wartung und/oder Reparatur beschädigter oder verschlissener Bauteile, ohne dass die gesamte Ladeschnittstelle ausgetauscht werden muss.

Als teilweise elektrisch betriebene Fahrzeuge sind grundsätzlich alle Fahrzeuge zu verstehen, welche eine Ladeschnittstelle zur Aufladung eines internen elektrischen Energiespeichers aufweisen, beispielsweise sogenannte Hybridfahrzeuge und Elektrofahrzeuge, insbesondere Personenkraftwagen mit entsprechend bezeichneten Antrieben.

Als Steuerkontakte sind die Kontakte zu verstehen, welche üblicherweise als PP (proximity pilot) und CP (control pilot) bezeichnet werden. Weitere Datenkontakte sind denkbar.

Als Wechselstromkontakte sind die zumindest fünf Kontakte zu verstehen, welche üblicherweise in elektrischen Ladesteckern und Ladebuchsen eingebracht sind, also Außenleiter 1, Außenleiter 2, Außenleiter 3, Neutralleiter und Schutzleiter.

Als Gleichstromkontakte sind zumindest die aus dem Stand der Technik, besonders aus sogenannten CCS Ladevorrichtungen, bekannten Kontakte zu verstehen, welche zur besonders schnellen Aufladung eines elektrischen Energiespeichers eingesetzt werden. Diese Kontakte sind üblicherweise besonders hohen Spannungen und Strömen ausgesetzt und neigen zu Verschleiß.

Als erstes Schnittstellenelement wird ein Modul bezeichnet, welches zumindest die Wechselstromkontakte, ähnlich einem Isolierkörper, aufnimmt. Erfindungsgemäß nimmt das erste Schnittstellenelement zusätzlich die Steuerkontakte auf. Optional ist ein modularer Aufbau mit einem dritten Schnittstellenelement denkbar, wobei das dritte Schnittstellenelement die Steuerkontakte aufnimmt und mit dem ersten Schnittstellenelement verbunden wird.

Als zweites Schnittstellenelement wird ein Modul bezeichnet, welches zumindest die Gleichstromkontakte aufnimmt.

Die verbundenen Schnittstellenelemente ein und zwei (und ggf. drei) bilden ein Steckgesicht, welches üblicherweise genormt ist. Erfindungsgemäß wird ein Steckgesicht für eine sogenannte Combo-Typ 2 Ladevorrichtung gebildet. Derartige kombinierte Ladeysteme sind auch als combined charging systems (CCS) bekannt.

Um bei zwei oder mehr Schnittstellenelementen sicher und austauschbar ein genormtes Steckgesicht zu formen, weisen die jeweiligen Schnittstellenelemente korrespondierende Formelemente auf. Dabei sind Systeme wie Nut und Feder, Schwalbenschwanzführungen oder Stifte und Zentrierbohrungen nur einige von vielen, dem Fachmann geläufigen Optionen.

Als Rahmen sei insbesondere ein das erste Schnittstellenelement und das damit verbundene zweite Schnittstellenelement umrandende Bauteil gemeint, welches geschickter Weise eine Ausnehmung aufweist, welche passgenau die verbundenen Schnittstellenelemente aufnimmt. Formelemente, welche als Anschlag für die Schnittstellenelemente dienen, sind vorteilhafterweise vorgesehen. Der Rahmen weist idealerweise Rastformen, beispielsweise Rastnasen und/oder Rasthaken auf, um mit einem Fahrzeug verbunden zu werden. Durchgangsöffnungen, wie Bohrungen zur Verwendung mit Schrauben, Nieten oder Bolzen sind bevorzugt. Selbstverständlich sind Kombinationen der Verbindungstechniken sinnvoll und denkbar.

Als Verschlussdeckel sei ein Formelement zu verstehen, welches sich Innenseitig des Fahrzeugs an den Rahmen anbringen lässt, um beispielsweise die Kontakte vor Fremdmedien zu schützen und/oder um Vergussmasse einzubringen. Der Verschlussdeckel sichert weiterhin die Schnittstellenelemente gegen ein Verschieben in Richtung Innenseite während eines Steckvorgangs.

Eine Ausführungsform der Erfindung sieht vor, dass der Verschlussdeckel zumindest eine Steckkontur mit zumindest einer Halteform aufweist. Dadurch können in cleverer Weise Steckverbinder eingesetzt werden, um einen Energiespeicher des Fahrzeugs mit der Ladeschnittstelle in Verbindung zu bringen. Der Montageaufwand des Fahrzeugs wird dadurch beschleunigt, vereinfacht und besser für eine automatisierte Montage geeignet gestaltet. Außerdem lässt sich die Ladeschnittstelle besser und einfacher reparieren und/oder warten, da im besten Fall nur ein Steckverbinder entfernt und wieder angebracht werden muss. Die Halteform kann grundsätzlich alle Formen annehmen, welche für Steckverbinder denkbar und sinnvoll sind. Besonders bevorzugt sind bolzenähnliche Fortsätze, welche die Verriegelung eines Steckverbinders mit einem Verriegelungshebel ermöglichen.

In einer weiteren Ausführungsform nimmt das erste Schnittstellenelement zumindest eine Leiterkarte auf, welche die Kontakte des ersten Schnittstellenelements elektrisch verbindend kontaktiert. Erfindungsgemäß ist die Leiterkarte mit Lötpads ausgeführt, sodass die Kontakte durch Öffnungen in der Leiterkarte geführt werden können und dann in Richtung Innenseite weisend auf der Leiterkarte mit Lot versehen werden. Hierdurch kann eine vergleichsweise Widerstandsfähige Verbindung erreicht werden, um betriebsbedingten Vibrationen zu trotzen. Alternativ sind auf der Leiterkarte fixierte Buchsenkontakte denkbar, scheinen allerdings zu kostenintensiv und ineffizient.

In einer alternativen Ausführungsform weist das erste Schnittstellenelement fahrzeuginnenseitig eine Schalung auf, welche zumindest die Kontakte des ersten Schnittstellenelements und die Leiterkarte umfangseitig umschließt.

Durch diese geschickte bauliche Anpassung wird in einfacher Weise der Schutz der Kontakte an der Innenseite erhöht, gleichzeitig kann die Leiterkarte einfacher und sicherer gehalten und geschützt werden.

In einer geschickten Ausführungsform verschließt der Verschlussdeckel die Schalung im montierten Zustand derart, dass eine Vergussmasse in die Schalung eingelassen werden kann, sodass der Raum zwischen der Schalung und dem Verschlussdeckel versiegelt ist.

Hierbei kann eine Durchgangsöffnung im Verschlussdeckel sinnvoll eingebracht sein, welche sich bei der Verwendung einer Vergussmasse nicht negativ auf die Mediendichtigkeit der modularen Ladeschnittstelle auswirkt, da die Mediendichtigkeit durch die Vergussmasse verbessert wird. Als Mediendichtigkeit ist besonders die Dichtigkeit gegenüber Fremdmedien, wie Schmutz, Staub und Wasser gemeint.

In einer fortgeschrittenen Ausführungsform leitet die Leiterkarte zumindest die verbundenen Kontakte des ersten Schnittstellenelements mittels elektrisch leitender Kontaktfahnen in Richtung der Innenseite ragend weiter.

Insbesondere in Kombination mit einer auf dem Verschlussdeckel angeordneten Steckkontur mit zumindest einer Halteform lässt sich durch derartige Kontaktfahnen eine einfach zu handhabende Ladeschnittstelle anbieten, welche durch einfache Steckverbinder eine Verbindung zwischen einem elektrischen Energiespeicher eines Fahrzeugs mit der Ladeschnittstelle ermöglichen. Der Verschlussdeckel weist hierfür sinnvollerweise je Kontaktfahne eine geeignete Durchgangsöffnung auf, durch welche die Kontaktfahnen von der Leiterkarte durch den Verschlussdeckel ragen können, um gemeinsam mit der Steckkontur ein Steckgesicht bilden.

In einer sinnvollen Ausführungsform weist die Leiterkarte zumindest einen Temperatursensor auf und leitet die Anschlüsse des Temperatursensors durch Kontaktfahnen in Richtung der Innenseite ragend kontaktierbar weiter.

Auf diese Weise kann, vergleichbar den Kontaktfahnen der Kontakte des ersten Schnittstellenelements mit einer Steckkontur des Verschlussdeckels in einfacher weise ein Steckverbinder für die Datenermittlung des Temperatursensors eingesetzt werden. Alternativ kann die Steckkontur des Verschlussdeckels dazu ausgelegt sein, sämtlich Kontaktfahnen des ersten Schnittstellenelements zu umfassen, sodass sowohl die Datenkontakte, als auch die Wechselstromkontakte und die Sensoranschlüsse zu umfassen, sodass mit einem Steckverbinder alle Kontaktfahnen steckbar in elektrisch leitende Verbindung gebracht werden.

Eine Ausführungsform schlägt daher vor, dass die Kontaktfahnen durch den Verschlussdeckel ragen und durch zumindest eine Steckkontur mit zumindest einem Steckverbinder lösbar zu verbinden, wobei der Steckverbinder ein mit der Steckkontur korrespondierendes Steckgesicht aufweist.

Geschickter Weise weist die Steckkontur zumindest eine Halteform auf, welche mit einem Rastelement des Steckverbinders korrespondiert. Dadurch können Steckverbinder über die Steckkraft der Kontaktelemente hinaus durch Rastelemente wie Verschlussbügel, Verschlusshebel, Push-Pull Verriegelungen, Push-Push Verriegelungen oder vergleichbaren Rastelementen gesichert werden. Eine Verbindung durch Schrauben, Klemmen oder vergleichbare Verbindungstechniken sind ebenfalls denkbar.

Weiterhin schlägt eine Ausführungsform vor, dass der Verschlussdeckel zumindest eine Durchgangsöffnung je Gleichstromkontakt aufweist.

Auf diese Weise werden die Gleichstromkontakte, vorzugsweise angeordnet an dem zweiten Schnittstellenelement, durch den Verschlussdeckel zumindest teilweise mediendicht eingefasst. Um die Mediendichtheit weiter zu fördern kann der Einsatz von Dichtelementen, beispielsweise Wellendichtringe oder O-Ringe, bedacht werden.

In einer weiterentwickelten Ausführungsform sind die Gleichstromkontakte zweiteilig ausgeführt. Ein erster Abschnitt und ein zweiter Abschnitt sind lösbar miteinander verbunden und ein erster Abschnitt ragt in die Innenseite und ein zweiter Abschnitt weist zur Außenseite. Dabei weist der erste Abschnitt ein erstes Gewinde und ein zweites Gewinde auf, wobei das erste Gewinde zum Anschluss an einen elektrischen Leiter des Energiespeichers im Fahrzeug vorgesehen ist und ein zweites Gewinde zur Verbindung mit einem ersten Abschnitt des Gleichstromkontaktes ausgeformt ist.

Auf diese Weise können die für schädliche Elektroerosion anfälligen Gleichstromkontakte auf einfache Art und Weise ausgetauscht werden, ohne die Demontage und/oder den Ausbau der modularen Ladeschnittstelle zu erfordern. Erfindungsgemäß ist das erste Gewinde des ersten Abschnitts als Außengewinde ausgeführt und das zweite Gewinde des ersten Abschnitts als Innengewinde ausgeführt. Das Innengewinde befindet sich vorzugsweise in einer Sacklochöffnung. Die Sacklochöffnung ist dabei mindestens tief genug ausgeführt, dass ein zweiter Abschnitt mit einem Außengewinde, korrespondierend zu dem Innengewinde des ersten Abschnitts, sicher verbunden werden kann. Vorteilhafte Ausgestaltungen der Erfindung sind in den Unteransprüchen und der folgenden Beschreibung angegeben.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung mit Blick auf eine Außenseite der Ladeschnittstelle ohne Rahmenelement;
- Fig. 2: eine perspektivische Darstellung mit Blick auf eine Innenseite der Ladeschnittstelle ohne Rahmenelement;
- Fig. 3: eine perspektivische Darstellung mit Blick auf eine Innenseite der Ladeschnittstelle;
- Fig. 4: eine Darstellung der modularen Ladeschnittstelle mit einem erfindungsgemäßen, nicht montierten Verschlussdeckel;
- Fig. 5: eine Darstellung der modularen Ladeschnittstelle mit einem montierten Verschlussdeckel

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

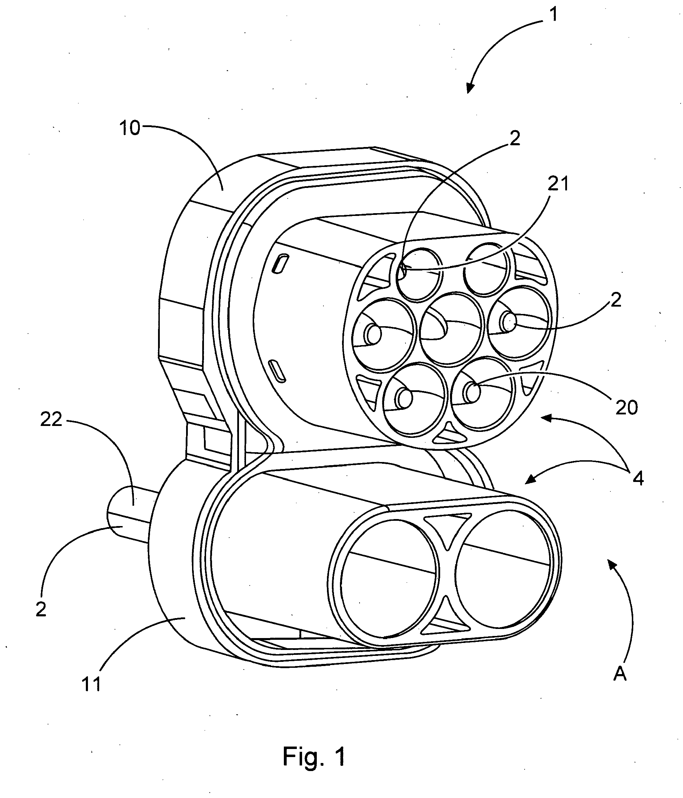

Die Figur 1 zeigt ein erstes Schnittstellenelement 10 einer modularen. Ladeschnittstelle 1 welches formschlüssig mit einem zweiten Schnittstellenelement 11 verbunden ist. Das erste Schnittstellenelement 10 nimmt verschiedene Kontakte 2 auf. Dabei handelt es sich bei zwei der Kontakte 2 um Steuerkontakte 21, welche üblicherweise als CP und PP bezeichnet werden. Weiterhin weist das erste Schnittstellenelement 10 fünf Wechselstromkontakte 20 auf. Dabei handelt es sich um drei Außenleiter (L1, L2 und L3), einen Neutralleiter (N) und einen Schutzleiter (PE). Das Schnittstellenelement 10 bildet ein genormtes Steckgesicht der in Europa weit verbreiteten Typ-2 Ladebuchse (IEC 62196 Typ 2). Das zweite Schnittstellenelement 11 ist mit zwei weiteren Kontakten 2 ausgeführt, wobei es sich um Gleichstromkontakte 22 handelt. Im Verbund mit dem ersten Schnittstellenelement 10 bildet das zweite Schnittstellenelement 11 ein genormtes Steckgesicht, welches als CCS Combo-2 bekannt ist. Die Schnittstellenelemente 10 und 11 werden von einer die Außenseite A betrachtenden Perspektive dargestellt.

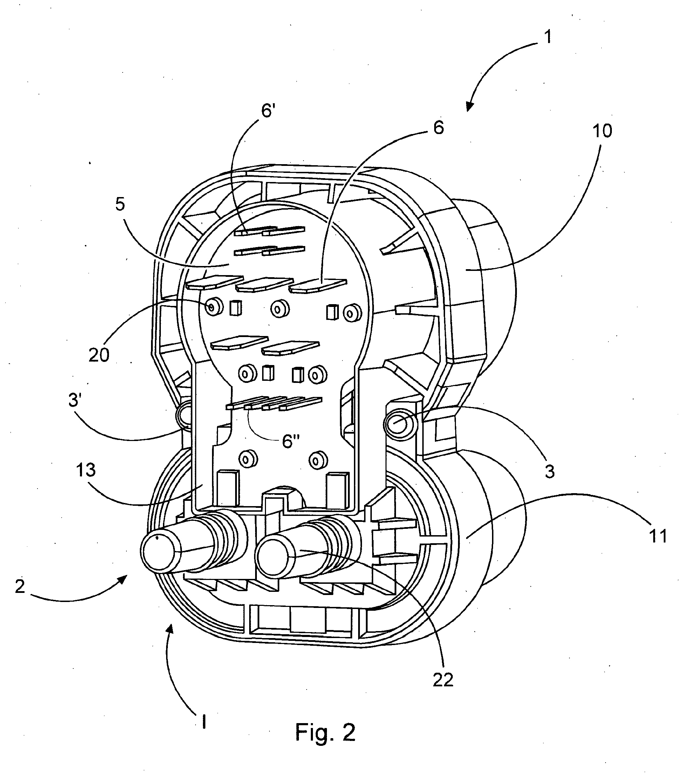

Die Figur 2 zeigt das erste Schnittstellenelement 10 der modularen Ladeschnittstelle 1, welches formschlüssig mit dem zweiten Schnittstellenelement 11 von der Innenseite I der Ladeschnittstelle betrachtet dargestellt ist. Hier wird eine Schalung 13 gut erkennbar dargestellt, welche auf der Innenseite I des ersten Schnittstellenelements 10 angeformt ist. Das erste Schnittstellenelement 10 weist zur Verbindung mit dem zweiten Schnittstellenelement 11 ein Formelement 3 auf. Dargestellt ist hierbei ein Formelement 3 als Zentrierstift, bzw. Zentrierbolzen. Das zweite Schnittstellenelement 11 weist dazu korrespondierende Formelemente 3' in der Form von Zentrierbohrungen, bzw. Zentrierdurchgangsöffnungen auf. In der dargestellten Ausführungsform sind die Gleichstromkontakte 22 mit dem zweiten Schnittstellenelement 11 umspritzt. Geschickter Weise sind die Gleichstromkontakte 22 mit einer Halteform (nicht erkennbar) versehen, welche einen sicheren Halt der Gleichstromkontakte 22 in dem zweiten Schnittstellenelement 11 gewährleisten. Beispielsweise können hier Ausnehmungen wie plane Bereiche vorgesehen sein. In der an dem ersten Schnittstellelement 10 angeformten Schalung 13 ist eine Leiterkarte 5 eingebracht. Die Leiterkarte 5 stellt dabei elektrischen Kontakt mit den Kontakten 2 des ersten Schnittstellenelements 10 her. Geschickter Weise durchstoßen alle Kontakte 2 des ersten Schnittstellenelements 10 die Leiterkarte 5, um beispielsweise auf der zur Innenseite I gerichteten Seite der Leiterkarte 5 mit dieser verlötet zu werden. Dargestellt ist diese erfindungsgemäße Vorgehensweise besonders bei den Wechselstromkontakten 20. Erfindungsgemäß ist diese Vorgehensweise auch bei den Steuerkontakten 21 vorgesehen. Die Leiterkarte 5 weist verschiedene Kontaktfahnen 6, 6' und 6" auf. Die Kontaktfahnen 6 sind dabei mit den Wechselstromkontakten 20 elektrisch verbunden. Die Kontaktfahnen 6' sind dabei mit den Steuerkontakten 21 verbunden. Die Kontaktfahnen 6" sind dabei mit auf der Leiterkarte 5 befindlichen Sensoren verbunden. Die Leiterkarte 5 ist besonders für die Aufnahme von Temperatursensoren vorgesehen. Die Anzahl der Kontaktfahnen 6, 6' und 6" kann je nach Ausführung der Ladeschnittstelle 1 varrieren.

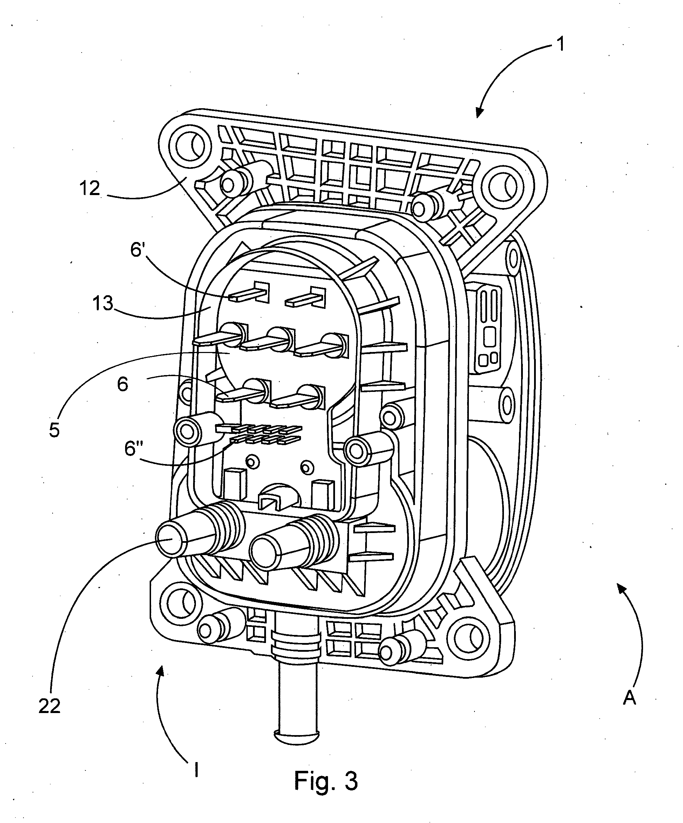

Die Figur 3 zeigt erneut die Innenseite I der modularen Ladeschnittstelle 1. Die Darstellung ist jedoch im Gegensatz zu der Figur 2 um den Rahmen 12 erweitert. Der Rahmen 12 nimmt die erste Schnittstelle 10 mit der damit verbundenen zweiten Schnittstelle 11 in sich auf und bietet Mittel zum Fixieren mit einem Fahrzeug, beispielsweise Durchgangsöffnungen.

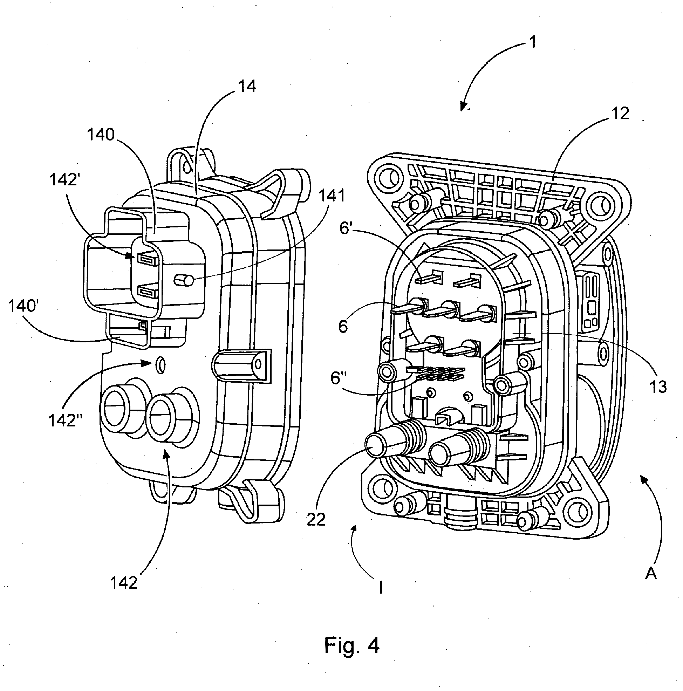

In der Figur 4 wird die in Figur 3 gezeigte modulare Ladeschnittstelle 1 um einen Verschlussdeckel 14 erweitert, wobei der Verschlussdeckel 14 noch nicht montiert dargestellt ist, um einige Merkmale zu verdeutlichen. Der Verschlussdeckel 14 weist dabei eine Steckkontur 140 auf. Weiterhin ist eine optionale, zweite Steckkontur 140' dargestellt. Die Steckkontur 140 umrandet dabei Durchgangsöffnungen 142', welche für die Kontaktfahnen 6 und 6' und 6" vorgesehen sind. Weiterhin weist die Steckkontur 140 eine Halteform 141 auf. Nicht sichtbar ist bei der gewählten Perspektive eine Halteform gegenüber der dargestellten Halteform 141. Der Verschlussdeckel 14 weist weiterhin Durchgangsöffnungen 142 für die Durchführung der Gleichstromkontakte 22 auf. Schließlich ist eine Durchgangsöffnung 142" zu erkennen, welche zur Befüllung der Schalung 13 mit einer Vergussmasse geeignet ist.

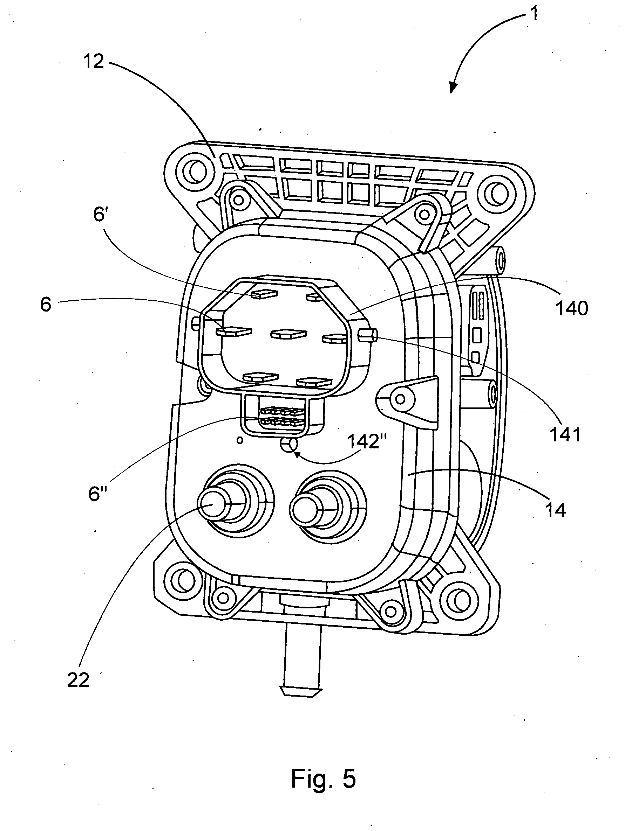

In der Figur 5 wird die modulare Ladeschnittstelle 1 gezeigt, wobei der Verschlussdeckel 14 mit dem Rahmen 12 und den darin eingefassten Modulen, dem ersten Schnittstellenelement 10 und dem zweiten Schnittstellenelement 11, fixiert ist. Dabei wird deutlich, dass die Kontaktfahnen 6, 6' und 6" der Leiterkarte 5 durch den Verschlussdeckel 14 ragen. Ebenso wird dargestellt, dass die Gleichstromkontakte 22 durch den Verschlussdeckel 14 ragen und so einfach kontaktiert werden können. Die Kontaktfahnen 6 und 6'sind von der Steckkontur 140 umgeben. Die Kontaktfahnen 6" sind mit.einem Trennelement innerhalb der Steckkontur 140 von den Kontaktfahnen 6 und 6' getrennt. Optional ist auch eine gemeinsame Steckkontur 140 denkbar. Die Halteform 141 ist hierbei beidseitig der Steckkontur 140 erkennbar angeformt. Die Halteform 141 ermöglicht es in einfacher Weise einen korrespondierenden Steckverbinder (nicht dargestellt) mit den Kontaktfahnen 6, 6' und 6" der modularen Ladeschnittstelle 1 zu verbinden.

### Bezugszeichenliste

- 1: Ladeschnittstelle
- 2: Kontakt
- 3: Formelement
- 4: Steckgesicht
- 5: Leiterkarte
- 6: Kontaktfahne

- 10: erstes Schnittstellenelement
- 11: zweites Schnittstellenelement
- 12: Rahmen
- 13: Schalung
- 14: Verschlussdeckel

- 20: Wechselstromkontakt
- 21: Steuerkontakt
- 22: Gleichstromkontakt

- 140: Steckkontur
- 141: Halteform
- 142: Durchgangsöffnung

- A: Außenseite der Ladeschnittstelle
- I: Innenseite der Ladeschnittstelle

## Patentansprüche

1. Modulare Ladeschnittstelle (1) für zumindest teilweise elektrisch betriebene Fahrzeuge, aufweisend ein erstes Schnittstellenelement (10) für die Aufnahme von Wechselstromkontakten (20) und Steuerkontakten (21), ein zweites Schnittstellenelement (11) für die Aufnahme von Gleichstromkontakten (22), wobei das erste Schnittstellenelement (10) und das zweite Schnittstellenelement (11) jeweils zumindest ein zueinander korrespondierendes Formelement (3, 3') aufweisen, sodass das erste Schnittstellenelement (10) und das zweite Schnittstellenelement (11) derart verbunden sind, dass in einer von dem Fahrzeug weg weisenden Außenseite (A) ein normgerechtes Steckgesicht (4) ausgebildet ist, wobei das erste Schnittstellenelement (10) und das zweite Schnittstellenelement (11) von einem Rahmen (12) eingefasst werden, welcher den Einbau in ein Fahrzeug ermöglicht und wobei eine in das Fahrzeug hinein weisende Innenseite (I) mit einem Verschlussdeckel (14) versehen ist, welcher zumindest teilweise lösbar mit dem Rahmen (12) verbunden ist.

2. Modulare Ladeschnittstelle (1) nach Anspruch 1
**dadurch gekennzeichnet, dass**
der Verschlussdeckel (14) zumindest eine Steckkontur (140) mit zumindest einer Halteform (141) aufweist.

3. Modulare Ladeschnittstelle (1) nach Anspruch 1
**dadurch gekennzeichnet, dass**
das erste Schnittstellenelement (10) zumindest eine Leiterkarte (5) aufnimmt, welche die Kontakte (2) des ersten Schnittstellenelements (10) elektrisch verbindend kontaktiert.

4. Modulare Ladeschnittstelle (1) nach Anspruch 1
**dadurch gekennzeichnet, dass**
das erste Schnittstellenelement (10) fahrzeuginnenseitig eine Schalung (13) aufweist, welche zumindest die Kontakte (2) des ersten Schnittstellenelements (10) und die Leiterkarte (5) umfangseitig umschließt.

5. Modulare Ladeschnittstelle (1) nach einem der vorstehenden Ansprüche
**dadurch gekennzeichnet, dass**
das der Verschlussdeckel (14) die Schalung (13) im montierten Zustand derart verschließt, dass eine Vergussmasse in die Schalung (13) eingelassen werden kann, sodass der Raum zwischen der Schalung (13) und dem Verschlussdeckel (14) versiegelt ist.

6. Modulare Ladeschnittstelle (1) nach einem der vorstehenden Ansprüche
**dadurch gekennzeichnet, dass**
die Leiterkarte (5) zumindest die verbundenen Kontakte (2) des ersten Schnittstellenelements (10) mittels elektrisch leitenden Kontaktfahnen (6) in Richtung der Innenseite (I) ragend weiterleitet.

7. Modulare Ladeschnittstelle (1) nach einem der vorstehenden Ansprüche
**dadurch gekennzeichnet, dass**
die Leiterkarte (5) zumindest einen Temperatursensor aufweist und durch Kontaktfahnen (6') in Richtung der Innenseite (I) ragend kontaktierbar weiterleitet.

8. Modulare Ladeschnittstelle (1) nach einem der vorstehenden Ansprüche
**dadurch gekennzeichnet, dass**
die Kontaktfahnen (6) durch den Verschlussdeckel (14) ragen und durch zumindest eine Steckkontur (140) mit zumindest einem Steckverbinder lösbar verbunden werden, wobei der Steckverbinder ein mit der Steckkontur (140) korrespondierendes Steckgesicht aufweist.

9. Modulare Ladeschnittstelle (1) nach einem der vorstehenden Ansprüche
**dadurch gekennzeichnet, dass**
die Steckkontur (140) zumindest eine Halteform (141) aufweist, welche mit einem Rastelement des Steckverbinders korrespondiert.

10. Modulare Ladeschnittstelle (1) nach einem der vorstehenden Ansprüche
**dadurch gekennzeichnet, dass**
der Verschlussdeckel (14) zumindest eine Durchgangsöffnung (142) je Gleichstromkontakt (32) aufweist.

11. Modulare Ladeschnittstelle (1) nach einem der vorstehenden Ansprüche
**dadurch gekennzeichnet, dass**
die Gleichstromkontakte (32) zweiteilig ausgeführt sind, wobei ein erster Abschnitt (32') und ein zweiter Abschnitt lösbar miteinander verbunden sind und wobei ein erster Abschnitt (32') in die Innenseite (I) ragt und ein zweiter Abschnitt zur Außenseite (A) weist und wobei der erste Abschnitt (32') ein erstes Gewinde und ein zweites Gewinde aufweist, wobei das erste Gewinde zum Anschluss eines Energiespeichers im Fahrzeug vorgesehen ist und ein zweites Gewinde zur Verbindung mit einem ersten Abschnitt des Gleichstromkontaktes (32) ausgeformt ist.
